# FASCICULE DE BREVET EUROPEEN

(11) **EP 0 741 960 B1**
(45) Date de publication et mention de la délivrance du brevet: **28.03.2001**
(21) Numéro de dépôt: 96440040.2
(22) Date de dépôt: 09.05.1996
(51) Int. Cl.: A01D 34/66, A01D 67/00

(54) **Faucheuse avec un dispositif d'allégement du mécanisme de récolte réglable à distance**
Mähmaschine mit einer fernverstellbaren Entlastungsvorrichtung des Erntemechanismus
A mowing machine having a harvesting mechanism with a lightening device adjustable by remote control

(30) Priorité: 10.05.1995 FR 9505692
(43) Date de publication de la demande: 13.11.1996
(73) Titulaire: KUHN S.A., 67700 Saverne (FR)
(72) Inventeur: Ermacora, Rino, 67700 St. Jean Saverne (FR); Walch, Martin, 67490 Dettwiller (FR); Wattron, Bernard, 67700 Saverne (FR); Wilhelm, Joel, 57820 St. Louis (FR)

(56) Documents cités:
- EP-A- 0 149 870
- EP-A- 0 163 587
- EP-A- 0 168 665
- EP-A- 0 361 573
- EP-A- 0 495 210
- EP-A- 0 570 315
- DE-A- 1 582 478
- DE-A- 4 126 515
- DE-A- 4 214 265
- FR-A- 2 584 889
- NL-A- 8 700 863
- US-A- 3 869 861

## Description

La présente invention concerne une faucheuse comportant notamment un mécanisme de récolte s'étendant, au cours du fauchage, transversalement à la direction de travail, et un dispositif d'allégement dudit mécanisme de récolte comprenant au moins un organe élastiquement déformable dont l'action peut être réglée à l'aide d'un dispositif de réglage accouplé audit organe élastiquement déformable.

La valeur de l'allégement du mécanisme de récolte d'une faucheuse est très importante pour la qualité du fauchage et dépend des conditions de travail (nature du terrain, nature du produit à récolter...). Un allégement trop important ne permet pas au mécanisme de récolte de rester continuellement en contact avec le sol. Il en résultera une coupe irrégulière non acceptable. Un allégement insuffisant, par contre, augmente les risques de bourrage et de création de traînées de produit non coupé par suite d'accumulation de terre sur le bord frontal du mécanisme de coupe, augmente la puissance qui est à développer pour tirer la faucheuse durant le travail, augmente l'usure, diminue la qualité du produit récolté et, enfin, maltraite la tapis végétal.

L'emploi d'un organe élastiquement déformable permet au mécanisme de récolte de s'adapter rapidement au relief du terrain dans lequel évolue la faucheuse tout en conservant un certain allégement dudit mécanisme de récolte lors de cette adaptation. L'aptitude à s'adapter rapidement au relief du terrain est très importante compte tenu des vitesses d'avance pouvant être actuellement atteintes avec les faucheuses.

Comme organes élastiquement déformables, il est connu d'utiliser des ressorts mécaniques de traction, des ressorts mécaniques de compression, des barres de torsion, des coussins déformables remplis d'air ou des accumulateurs à azote combinés à des vérins hydrauliques.

Une faucheuse dont le mécanisme de récolte est allégé au moyen de deux ressorts mécaniques de traction est par exemple connue par le document GB-A-2 053 645.

Cette faucheuse connue comporte un mécanisme de récolte s'étendant, durant le travail, transversalement à la direction de travail. Ce mécanisme de récolte se compose d'une barre de coupe munie de disques rotatifs destinés à couper le produit à récolter, et d'un rotor de conditionnement destiné à traiter le produit coupé par lesdits disques rotatifs.

Ce mécanisme de récolte est suspendu dans un châssis au moyen d'un quadrilatère déformable autorisant un déplacement en hauteur dudit mécanisme de récolte par rapport au châssis.

Le châssis comporte deux roues au moyen desquelles il roule sur le sol, ainsi qu'un timon à l'aide duquel la faucheuse est attelée à un véhicule moteur. L'allégement du mécanisme de récolte est réalisé par deux ressorts mécaniques de traction s'étendant de part et d'autre du mécanisme de récolte et implantés entre ledit mécanisme de récolte et le châssis.

Un boulon de réglage prévu au niveau de la liaison de chaque ressort au châssis, permet de régler la tension dudit ressort, c'est-à-dire la valeur de l'allégement procuré par celui-ci. Pour ce faire, on tourne chaque boulon de réglage pour tendre le ressort correspondant jusqu'à l'obtention de l'allégement souhaité. Pour obtenir l'allégement optimal, l'utilisateur devra en général effectuer plusieurs tests, ce qui l'oblige, à chaque fois, à interrompre le fauchage et à descendre du véhicule moteur.

On comprendra que cette opération peut occasionner des pertes de temps d'autant plus que le réglage initial réalisé lorsque la faucheuse est propre, risque d'être rapidement faussé durant le travail par suite de l'accumulation progressive de terre et de débris végétaux sur le mécanisme de récolte (barre de coupe, canal de conditionnement, organe de protection entourant la barre de coupe).

Compte tenu du temps que nécessite le réglage précis de la valeur de l'allégement du mécanisme de récolte et de l'évolution de cette valeur au cours du travail, il est fort probable qu'en pratique cette faucheuse connue soit rarement réglée de manière optimale.

Une faucheuse équipée d'un dispositif d'allégement de son mécanisme de récolte faisant appel à des accumulateurs à azote combinés à des vérins hydrauliques est décrite dans le document EP-A-0 149 870.

Cette faucheuse connue comporte un mécanisme de récolte s'étendant, durant le travail, transversalement à la direction de travail. Ce mécanisme de récolte comporte un châssis dans lequel est fixée une barre de coupe munie de disques rotatifs destinés à couper le produit à récolter, et dans lequel sont guidés en rotation des rouleaux de conditionnement destinés à traiter le produit coupé par lesdits disques. Ce mécanisme de récolte s'appuie sur le sol au moyen de deux roues et est destiné à être attelé à un tracteur à l'aide d'un timon.

Chaque roue s'étend derrière une extrémité longitudinale correspondante du mécanisme de récolte et y est liée au moyen d'un bras de roue. Chaque bras de roue porte, à son extrémité arrière, la roue correspondante et est lié au mécanisme de récolte, à son extrémité avant, au moyen d'une articulation d'axe horizontale s'étendant, au travail, transversalement à la direction de travail. En outre, entre chaque bras de roue et le mécanisme de récolte est implanté un organe de levage et d'allégement.

Chaque organe de levage et d'allégement comporte tout d'abord un premier vérin hydraulique. L'action conjuguée des deux premiers vérins hydrauliques permet de lever le mécanisme de récolte.

Dans une première réalisation, dans laquelle le timon est lié à une extrémité longitudinale du mécanisme de récolte, chaque organe de levage et d'allégement comporte ensuite un deuxième vérin hydraulique associé à un accumulateur à gaz. Chaque deuxième vérin hydraulique et son accumulateur à gaz constituent ainsi une enveloppe déformable dont la pression du gaz peut être réglée. L'action conjuguée des deux enveloppes déformables permet de diminuer la pression avec laquelle le mécanisme de récolte repose sur le sol.

La valeur de la pression avec laquelle le mécanisme de récolte repose sur le sol peut être réglée.

Pour ce faire, on injecte tout d'abord de l'huile dans les deux premiers vérins hydrauliques jusqu'à ce que ceux-ci soient allongés au maximum. Dans cette position, le mécanisme de récolte est complètement levé. En poursuivant l'alimentation en huile, ce sont ensuite les deuxièmes vérins hydrauliques qui se remplissent, ce qui a pour effet de faire augmenter la pression du gaz contenu dans les accumulateurs à gaz. Lorsque la quantité d'huile fournie est suffisante, on stoppe l'alimentation, on obture chaque deuxième vérin hydraulique au moyen d'une vis d'obturation et on abaisse à nouveau le mécanisme de récolte, en permettant à l'huile contenue dans les premiers vérins hydrauliques de retourner vers la source d'alimention.

Après cette opération, la pression du gaz contenu dans les deux accumulateurs à gaz est maximale. Il y a alors lieu de ramener cette pression à la valeur convenable en faisant sortir une certaine quantité d'huile des deuxièmes vérins hydrauliques au moyen des vis d'obturation. Certes, la pression du gaz contenu dans chaque accumulateur peut être lue de façon précise sur un manomètre respectif, mais il faudra, là aussi plusieurs tests pour obtenir la valeur optimale de l'allégement.

Dans le document EP-A-0 149 870 est également décrite un faucheuse dont le dispositif d'allégement fait appel à deux coussins d'air.

Dans cette autre faucheuse connue, le timon est lié dans la partie médiane du mécanisme de récolte, ce qui permet de faucher alternativement des deux côtés du tracteur en plaçant le mécanisme de récolte dans la position adéquate.

Dans cette réalisation, chaque organe de levage et d'allégement comporte, outre le premier vérin hydraulique, un coussin d'air dont la pression est réglable. L'action conjuguée des deux coussins d'air permet, là aussi, de diminuer la pression avec laquelle le mécanisme de récolte repose sur le sol.

Etant donné que le mécanisme de récolte doit travailler alternativement à droite et à gauche du tracteur, il y a lieu de modifier alternativement, à chaque changement de positon, la valeur de la pression dans les deux coussins d'air. A cet effet, chaque coussin d'air est associé à une vanne permettant d'y faire pénétrer de l'air ou d'en faire sortir de l'air, et dont l'action est commandée par le timon. Ainsi, à chaque rotation du timon, la pression de l'air contenu dans l'un des coussins d'air est augmentée à une première valeur prédéterminée, tandis que la pression de l'air contenu dans l'autre coussin d'air est diminuée à une deuxième valeur prédéterminée. Le réglage de ces valeurs s'opère manuellement directement sur les vannes implantées près de l'extrémité arrière du timon et dont la construction est très complexe et fait appel à trois ressorts métalliques devant agir conjointement entre-eux et à de nombreux joints, ce qui risque de rendre leur fonctionnement relativement hasardeux.

Une autre faucheuse équipée d'un dispositif d'allégement de son mécanisme de récolte faisant appel à deux coussins d'air est décrite dans le document EP-A-0 570 315.

Cette faucheuse connue comporte un mécanisme de récolte s'étendant, au travail, transversalement à la direction de travail. Elle comporte également une structure d'attelage par l'intermédiaire de laquelle elle peut être attelée au dispositif de levage à trois points d'un tracteur.

Le mécanisme de récolte est lié à la structure d'attelage au moyen d'un bras oscillant. Ce bras oscillant est lié, à l'une de ses extrémités, directement ou indirectement à la structure d'attelage au moyen d'une première articulation d'axe géométrique dirigé vers l'avant. A son autre extrémité, le bras oscillant est lié à l'une des extrémités du mécanisme de récolte au moyen d'une deuxième articulation d'axe géométrique au moins sensiblement parallèle à l'axe géométrique de la première articulation.

A l'extrémité opposée du mécanisme de récolte est implantée une roue liée au mécanisme de récolte au moyen d'un quadrilatère déformable dans un plan au moins sensiblement vertical.

Entre le bras oscillant et le mécanisme de récolte est implanté un premier organe de levage et d'allégement, tandis qu'un deuxième organe de levage et d'allégement agit sur le quadrilatère déformable.

Ce premier organe de levage et d'allégement et ce deuxième organe de levage et d'allégement comportent chacun tout d'abord un vérin hydraulique servant à lever l'extrémité respective du mécanisme de récolte lors du transport.

Ces deux organes de levage et d'allégement comportent ensuite chacun un coussin déformable contenant de l'air sous pression et monté en parallèle avec le vérin hydraulique de levage correspondant. Ces deux coussins déformables remplissent ainsi la fonction d'allégement du mécanisme de récolte permettant au mécanisme de récolte de reposer avec une pression optimale sur le sol.

Pour permettre à l'utilisateur d'adapter la valeur de l'allégement du mécanisme de récolte de la faucheuse connue aux conditions de travail rencontrées, chaque coussin déformable est doté d'une valve au travers de laquelle l'utilisateur peut faire entrer ou sortir de l'air pour moduler la pression à l'intérieur du coussin déformable. Une pression plus forte procurera un allégement plus important, tandis qu'une pression plus faible procurera un allégement moins important.

Dans cette faucheuse connue, il est prévu d'insuffler de l'air dans le coussin déformable au moyen d'une simple pompe à air. Ceci veut dire que l'utilisateur devra, là aussi, comme dans le cas des faucheuses précédentes, faire plusieurs tests de fauchage successifs jusqu'à ce que chaque coussin déformable soit gonflé à la bonne pression. Ceci nécessite également, à chaque fois, d'interrompre le fauchage et de descendre du tracteur.

Dans le document US-A-4,920,732 est décrite une tondeuse autoportée comportant un petit porte-outil motorisé et une tondeuse montée sur l'avant de celui-ci au moyen d'un quadrilatére déformable dans un plan vertical. Un vérin hydraulique destiné notamment à lever la tondeuse, est implanté directement entre le quadrilatère déformable et le porte-outil.

Ce vérin hydraulique, du type simple effet, est alimenté en huile par une source d'alimentation au travers d'un circuit d'alimentation. La source d'alimentation est constituée d'une centrale hydraulique comportant, de manière connue, une pompe et un réservoir. Dans la boucle du circuit d'alimentation contenant la pompe est implanté un étranglement réglable, tandis qu'une conduite branchée sur ladite boucle entre la pompe et l'étranglement, est destinée à alimenter la petite chambre du vérin hydraulique. Ainsi, en réglant la section de l'étranglement, on module la valeur de la pression en amont dudit étranglement, c'est-à-dire également dans la conduite alimentant le vérin hydraulique. Cette pression dans la petite chambre du vérin hydraulique se traduit par un transfert de poids de la tondeuse sur les roues avant motrices du porte-outil.

Pour soulever la tondeuse du sol, l'utilisateur obture complétement l'étranglement de sorte que toute l'huile débitée par la pompe pénètre dans le vérin hydraulique.

Si, pendant l'utilisation, la tondeuse rencontre une bosse, elle se déplace vers le haut. Ce faisant la tige du vérin hydraulique se déplace très rapidement dans le cylindre du vérin et de l'huile débitée par la pompe pénètre très rapidement dans la petite chambre. Dés que la bosse est passée, le poids de la tondeuse tire à nouveau la tige en dehors du cylindre en forçant une partie de l'huile contenue dans la petite chambre à en sortir. Mais, compte tenu de la pression qui règne dans la conduite alimentant le vérin, la descente se fait relativement lentement ce qui se traduit par une mauvaise coupe.

Le même phénomène de descente trop lente se produit d'ailleurs également si pendant l'utilisation, la tondeuse rencontre un trou.

Pour essayer de résoudre ce problème, on a modifié ledit vérin hydraulique en désolidarisant le piston de la tige (cf. document EP-A-0 495 210). Ainsi, lorsque durant l'utilisation la tondeuse passe sur une bosse, ce sera uniquement la tige qui se déplacera rapidement, alors que le piston est censé conserver sensiblement sa position. De cette sorte, la descente de la tondeuse doit être plus rapide une fois la bosse passée étant donné qu'il n'y a pas d'huile à extraire du vérin.

Mais, étant donné que la pompe continue de débiter de l'huile, le piston se déplace tout de même quelque peu dans le cylindre, de telle sorte que la tondeuse ne devrait pas non plus retrouver rapidement sa position initiale. Du reste, comme durant tout le passage de la bosse, le piston n'est plus en contact avec la butée prévue à l'extrémité de la tige, il n'y aura pas de report de poids de la tondeuse sur le porte-outil.

En outre, cette tondeuse modifiée possède les mêmes inconvénients que celle précédemment décrite en cas de rencontre d'un trou, puisque, là aussi, de l'huile devra être chassée hors de la petite chambre du vérin.

La présente invention a ainsi pour objectif de simplifier et de rendre plus rapide l'opération de réglage de l'allégement du mécanisme de récolte d'une faucheuse tout en conservant les avantages procurés par l'utilisation d'un organe élastiquement déformable.

A cet effet, une première faucheuse selon la présente idée inventive, qui comporte :
- un mécanisme de récolte s'étendant, au cours du fauchage, transversalememt à la direction de travail,
- une structure porteuse comportant notamment un moyen de liaison destiné à lier la faucheuse à un véhicule moteur,
- un dispositif de liaison liant le mécanisme de récolte à la structure porteuse de sorte à autoriser un déplacement en hauteur dudit mécanisme de récolte par rapport à la structure porteuse, et
- un dispositif d'allégement du mécanisme de récolte comprenant un (plusieurs) organe(s) élastiquement déformable(s) dont l'action (de chacun) peut être réglée à l'aide d'un dispositif de réglage accouplé audit (auxdits) organe(s) élastiquement déformable(s) qui (dont chacun) est constitué d'une enveloppe déformable contenant un gaz sous pression réglable, ledit dispositif de réglage comportant notamment un circuit d'alimentation muni d'une vanne associée à ladite (par) enveloppe déformable et destinée, en vue du réglage de la valeur de la pression du gaz contenu dans ladite enveloppe déformable, à faire pénétrer dans l'enveloppe déformable un fluide délivré par une source d'alimentation, à maintenir la pression du gaz contenu dans l'enveloppe déformable ou à faire sortir du fluide de ladite enveloppe déformable,
est caractérisée en ce que ladite (chaque) vanne est une électrovanne pilotable électriquement par l'utilisateur à partir du poste de conduite du véhicule moteur et comportant au moins deux positions :
- une première position dans laquelle du fluide ne peut ni pénétrer, ni sortir de l'enveloppe déformable,
- une deuxième position dans laquelle du fluide peut pénétrer ou sortir de l'enveloppe déformable.

Une deuxième faucheuse selon la présente idée inventive, qui comporte :
- un mécanisme de récolte s'étendant, au cours du fauchage, transversalement à la direction du travail,
- une structure porteuse comportant notamment un moyen de liaison destiné à lier la faucheuse à un véhicule moteur,
- un dispositif de liaison liant le mécanisme de récolte à la structure porteuse de sorte à autoriser un déplacement en hauteur dudit mécanisme de récolte par rapport à la structure porteuse, et
- un dispositif d'allégement du mécanisme de récolte comprenant un (plusieurs) organe(s) élastiquement déformable(s) dont l'action (de chacun) peut être réglée à l'aide d'un dispositif de réglage accouplé audit (auxdits) organe(s) élastiquement déformable(s) qui (dont chacun) est constitué d'un ressort mécanique,
est caractérisée en ce que ledit dispositif de réglage comporte un vérin associé audit (pour chaque) ressort mécanique, ainsi qu'un circuit d'alimentation muni d'une vanne associée audit (par) vérin et destinée, en vue du réglage de l'action du ressort mécanique correspondant, à faire pénétrer dans le vérin du fluide délivré par une source d'alimentation, à maintenir le fluide dans ledit vérin ou à faire sortir du fluide dudit vérin, ladite (chaque) vanne étant pilotable par l'utilisateur à partir du poste de conduite du véhicule moteur et comportant au moins deux positions :
- une première position dans laquelle le fluide ne peut ni pénétrer, ni sortir du vérin,
- une deuxième position dans laquelle du fluide peut pénétrer ou sortir du vérin.

Dans les faucheuses selon la présente invention, l'utilisateur pourra, à partir du poste de pilotage du véhicule moteur, selon le cas, augmenter ou diminuer l'action du (des) organe(s) élastiquement déformable(s) jusqu'à ce qu'elles travaillent de manière optimale. Un conducteur habile pourra même faire cette opération sans interrompre le fauchage.

Si, au cours du travail, l'utilisateur s'aperçoit que le comportement de la faucheuse a changé, il lui suffira tout simplement, sans quitter son poste de conduite, voire, comme dit, sans interrompre le fauchage, de réajuster la valeur de l'action procurée par l'(les) organe(s) élastiquement déformable(s).

On comprendra donc que, dans les faucheuses selon la présente invention, le réglage de la valeur de l'allégement est très simple et très rapide, ce qui devrait conduire les utilisateurs à travailler avec des faucheuses beaucoup mieux réglées.

Il convient encore de faire observer que ce réglage peut s'opérer en toute sécurité puisque l'utilisateur n'a pas besoin de quitter son poste de conduite.

Il convient enfin de faire observer que ces avantages ont pu être obtenus avec des moyens relativement simples et tout en conservant les atouts de l'organe élastiquement déformable comme moyen d'allégement.

L'organe élastiquement déformable de la première faucheuse selon la présente idée inventive pourra être constitué d'un coussin d'air ou d'un vérin hydraulique et d'un accumulateur à gaz (généralement de l'azote) montés en série.

Dans le premier cas (coussin(s) d'air), le circuit d'alimentation pourra comporter, en amont de la (des) vanne(s) associée(s) au(x) coussin(s) d'air, une autre vanne branchée en série sur ladite (lesdites) vanne(s) et comportant :
- une première position dans laquelle l'air peut s'échapper,
- une deuxième position dans laquelle l'air ne peut pas s'échapper.

Cette autre vanne sera avantageusement constituée d'une électrovanne dont, de préférence, la première position sera la position neutre et la deuxième position sera la position excitée.

Préférentiellement, il sera également prévu que l'échappement de l'air contenu dans le(s) coussin(s) d'air se fasse à l'air libre.

Il pourra du reste être avantageusement prévu qu'en amont de la (des) vannes(s) associée(s) au (aux) coussin(s) d'air le circuit d'alimentation comporte une soupape de sécurité évitant une surpression dans le circuit.

La source d'alimentation en air comprimé pourra être constituée par une centrale pneumatique directement prévue sur le véhicule moteur ou par un compresseur d'air monté sur la faucheuse. Ce dernier pourra être entraîné par une prise de force du véhicule moteur ou par un moteur auxiliaire de préférence également monté sur la faucheuse. Ce moteur auxiliaire pourra être du type hydraulique ou électrique.

Il pourra du reste être prévu qu'un moyen provoque la mise de l'autre vanne dans sa deuxième position lorsque le moteur auxiliaire est actionné. Si le moteur auxiliaire est un moteur électrique, ce moyen pourra être constitué d'une simple liaison électrique. Si, par contre, le moteur auxiliaire est un moteur hydraulique, ledit moyen pourra être constitué d'un contacteur électrique à pression.

Dans le cas où l'organe élastiquement déformable est constitué d'un vérin hydraulique et d'un accumulateur à gaz montés en série, l'huile sera de préférence fournie par la centrale hydraulique du véhicule moteur. Un étranglement, de préférence réglable, pourra être prévu en amont du vérin hydraulique pour faciliter le réglage de la valeur de l'allégement.

Un tel étranglement pourra, dans le même but, également être prévu en amont du vérin prévu dans la deuxième faucheuse selon la présente idée inventive au cas où ce vérin est un vérin hydraulique.

Il convient de préciser que l'emploi du mot "en amont" dans la description ci-dessus et suivante est à comprendre en considérant le circuit d'alimentation dans le sens source d'alimentation vers coussin d'air, vérin hydraulique et accumulateur de gaz montés en série (première faucheuse) ou vérin (deuxième faucheuse).

Au cas où il est prévu au moins deux organes élastiquement déformables (de préférence un près de chaque extrémité au moins du mécanisme de récolte), l'action de ceux-ci pourra avantageusement être réglable individuellement ou simultanément.

D'autres caractéristiques et avantages de la présente invention ressortent de la description suivante de quelques exemples de réalisation non limitatifs faite en référence au dessin annexé dans lequel :
- la figure 1 représente une vue de dessus d'un exemple de réalisation d'une première faucheuse selon l'invention liée à un tracteur agricole et placée dans la position de travail ;
- la figure 2 représente une vue suivant la flèche II définie sur la figure 1 ;
- la figure 3 représente une vue suivant la flèche III définie sur la figure 1 ;
- la figure 4 représente, en coupe, un organe de levage et d'allégement dans sa position de travail ;
- la figure 5 représente, en coupe, l'organe de levage et d'allégement de la figure 4 dans sa position de transport ;
- la figure 6 représente schématiquement l'alimentation des coussins d'air des organes de levage et d'allégement ;
- la figure 7 représente les électrovannes associées aux coussins d'air en position excitée ;
- la figure 8 représente le contacteur électrique à pression et l'électrovanne d'échappement en position excitée ;
- la figure 9 représente schématiquement un deuxième exemple de réalisation des organes d'allégement et de leur alimentation;
- la figure 10 représente, en position excitée, les électrovannes associées aux organes d'allégement du deuxième exemple de réalisation ;
- la figure 11 représente une vue latérale d'un exemple de réalisation d'une deuxième faucheuse selon l'invention placée en position de travail ;
- la figure 12 représente schématiquement les organes d'allégement de cette deuxième faucheuse et l'alimentation des vérins hydrauliques.

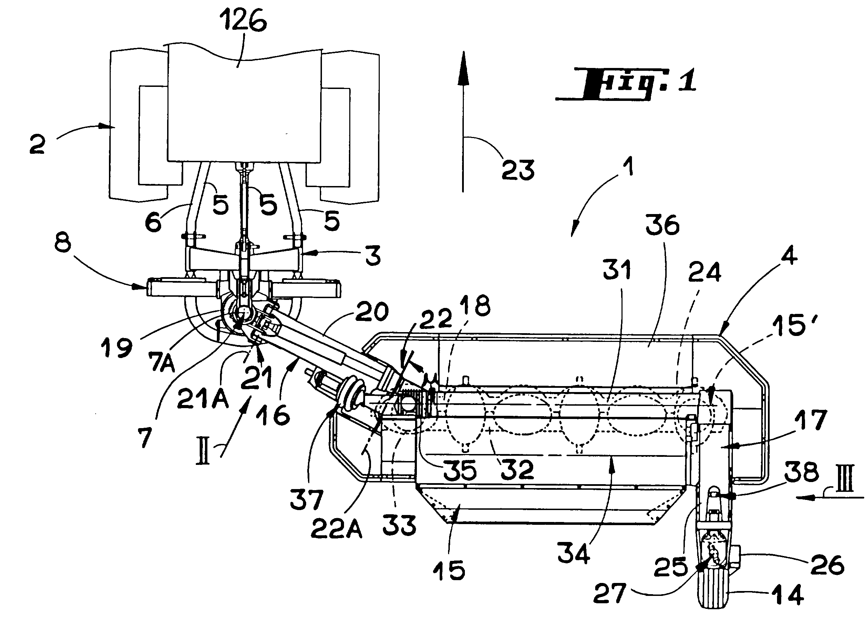

Sur les figures 1 à 8, est représentée une première faucheuse (1) qui est similaire à celle décrite dans les documents EP-A-0 570 314, EP-A-0 570 315, EP-A-0 570 316 et EP-A-0 579 564 auxquels on pourra se reporter en cas de besoin.

Sur la figure 1, la faucheuse (1) est représentée attelée à un tracteur agricole (2) et en position de travail. Elle se compose d'une structure d'attelage (3) et d'un corps (4).

La structure d'attelage (3) est destinée à être liée, à sa partie frontale, aux trois points (5) du dispositif de relevage (6) du tracteur (2). Le corps (4) est lié à la structure d'attelage (3) au moyen d'une articulation cylindrique (7) d'axe géométrique (7A) au moins sensiblement vertical. La position angulaire du corps (4) par rapport à la structure d'attelage (3) peut être modifiée en faisant pivoter le corps (4) autour dudit axe géométrique (7A). La mise dans la position angulaire souhaitée est réalisée sous l'action d'un vérin hydraulique de manoeuvre (8). Le corps (4) peut ainsi être amené d'une position de transport (non représentée), où il s'étend longitudinalement derrière le tracteur (2) dans la position de travail (figure 1), où il s'étend au moins sensiblement à côté de la voie du tracteur (2). Lorsque le corps (4) est dans sa position de travail, on empêche l'huile de s'écouler du vérin de manoeuvre (8), ce qui a pour effet de condamner le pivotement dudit corps (4) autour de l'axe géométrique (7A). A l'inverse, au transport, le vérin de manoeuvre (8) autorise le libre pivotement du corps (4) autour de l'axe géométrique (7A). De ce fait, au transport, le corps (4) se comporte comme une remorque étant donné qu'il est doté d'une roue (14) implantée à son extrémité longitudinale éloignée de la structure d'attelage (3).

Le corps (4) de la faucheuse (1) comporte par ailleurs un mécanisme de récolte (15), deux organes de liaison (16, 17) et deux organes de levage et d'allégement (37, 38).

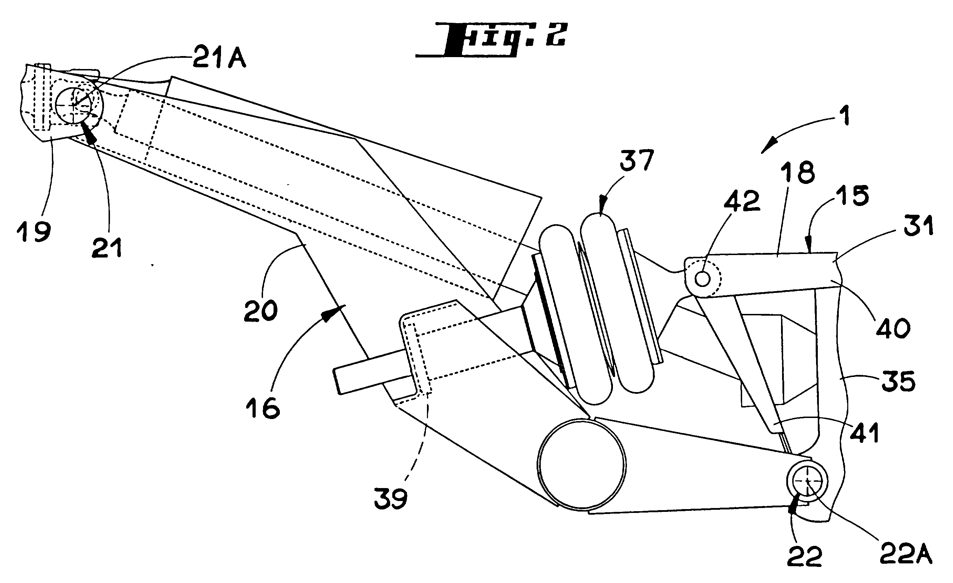

Le premier organe de liaison (16) qui est représenté plus en détail sur la figure 2, lie la première extrémité longitudinale (18) du mécanisme de récolte (15) à la structure d'attelage (3). A cet effet, ce premier organe de liaison (16) se compose d'une tête (19) montée pivotante autour de l'axe géométrique (7A) de la structure d'attelage (3), et d'un bras oscillant (20) liant le mécanisme de récolte (15) à ladite tête (19). Grâce à ce bras oscillant (20), la première extrémité longitudinale (18) peut se déplacer en hauteur de manière importante par rapport à la structure d'attelage (3) afin de s'adapter au relief du terrain. A cet effet, ce bras oscillant (20) est lié, à l'une de ses extrémités, à la tête (19) au moyen d'une première liaison pivot (21) dont l'axe géométrique (21A) s'étend au moins sensiblement orthogonalement à l'axe longitudinal du bras oscillant (20) et à l'axe géométrique (7A). A son autre extrémité, le bras oscillant (20) est lié au mécanisme de récolte (15) au moyen d'une deuxième liaison pivot (22) d'axe géométrique (22A) au moins sensiblement parallèle à l'axe géométrique (21A) de la première liaison pivot (21). Du reste, l'axe géométrique (22A) de la deuxième liaison pivot (22) s'étend, en vue suivant la direction de travail (23), au moins sensiblement à mi-hauteur du mécanisme de récolte (15) et forme, en vue de dessus, un angle (µ) d'environ 60° avec l'axe longitudinal (15') dudit mécanisme de récolte (15).

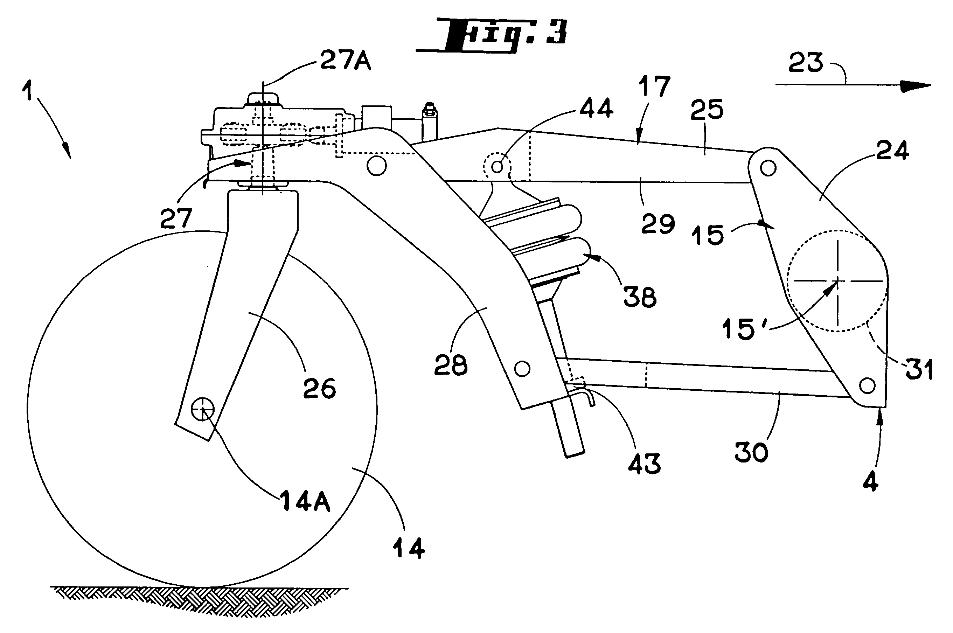

Le deuxième organe de liaison (17) (figure 3) lie la deuxième extrémité longitudinale (24) du mécanisme de récolte (15) à la roue (14). Ce deuxième organe de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15') du mécanisme de récolte (15). L'organe de guidage (26) de la roue (14), quant à lui, est lié au quadrilatère déformable (25) au moyen d'une articulation cylindrique (27) d'axe géométrique (27A) au moins sensiblement vertical. Grâce à cet agencement, la deuxième extrémité longitudinale (24) du mécanisme de récolte (15) peut aisément se déplacer en hauteur par rapport à la roue (14) pour s'adapter au relief du terrain, tout en autorisant le pivotement de la roue (14). Le quadrilatère déformable (25) comporte une console (28), à la partie supérieure de laquelle est articulé l'organe de guidage (26) de la roue (14), et deux bielles (29, 30) liant cette console (28) au mécanisme de récolte (15). Ce quadrilatère déformable (25) a au moins sensiblement la forme d'un parallélogramme dont le côté matérialisé par la console (28) s'étend vers le haut et vers l'arrière par rapport à la direction de travail (23), de sorte à ménager un espace permettant à la roue (14) de pivoter de 360° autour de l'axe géométrique (27A).

Le mécanisme de récolte (15) qui s'étend entre les deux organes de liaison (16, 17), comporte une poutre porteuse (31) à laquelle sont liés les deux organes de liaison (16, 17). Cette poutre porteuse (31) supporte une barre de coupe (32) équipée d'organes de coupe (33) (disques rotatifs munis de couteaux articulés), et un rotor de traitement (34) (dont seul l'axe de rotation est représenté sur la figure 1) destiné à traiter le produit coupé par lesdits organes de coupe (33). La poutre porteuse (31) s'étend au moins sensiblement orthogonalement à la direction de travail (23) et comporte un carter d'entrée (35) servant à l'entraînement des organes de coupe (33) et du rotor de traitement (34). Le carter d'entrée (35) est implanté dans le voisinage de la deuxième liaison pivot (22) liant le premier organe de liaison (16) au mécanisme de récolte (15). Le mécanisme de récolte (15) comporte aussi des organes de protection (36) qui s'étendent autour de la barre de coupe (32) et du rotor de traitement (34).

L'allégement du mécanisme de récolte (15) est réalisé au moyen de deux organes de levage et d'allégement (37, 38) associés chacun à un organe de liaison (16, 17) correspondant. Le premier organe de levage et d'allégement (37) (figure 2) est implanté entre le bras oscillant (20) du premier organe de liaison (16) et la poutre porteuse (31) du mécanisme de récolte (15). Comme visible sur la figure 2, le premier organe de levage et d'allégement (37) est lié d'une part au moins sensiblement au milieu du bras oscillant (20) à l'aide d'une articulation élastique (39) et d'autre part au carter d'entrée (35) de la poutre porteuse (31) au moyen de deux bras (40, 41). Ces deux bras (40, 41) forment avec le carter d'entrée (35) une triangulation très rigide à laquelle est lié le premier organe de levage et d'allégement (37) à l'aide d'une bague élastique (42). Grâce à l'articulation élastique (39) et à la bague élastique (42), l'organe de levage et d'allégement (37) est d'un montage aisé et d'un fonctionnement silencieux. De surcroît, les vibrations sont amorties.

Le deuxième organe de levage et d'allégement (38) (figure 3) s'étend entre la partie inférieure de la console (28) du quadrilatère déformable (25) à laquelle il est lié au moyen d'une articulation élastique (43), et la bielle supérieure (29) dudit quadrilatère déformable (25) à laquelle il est lié au moyen d'une bague élastique (44).

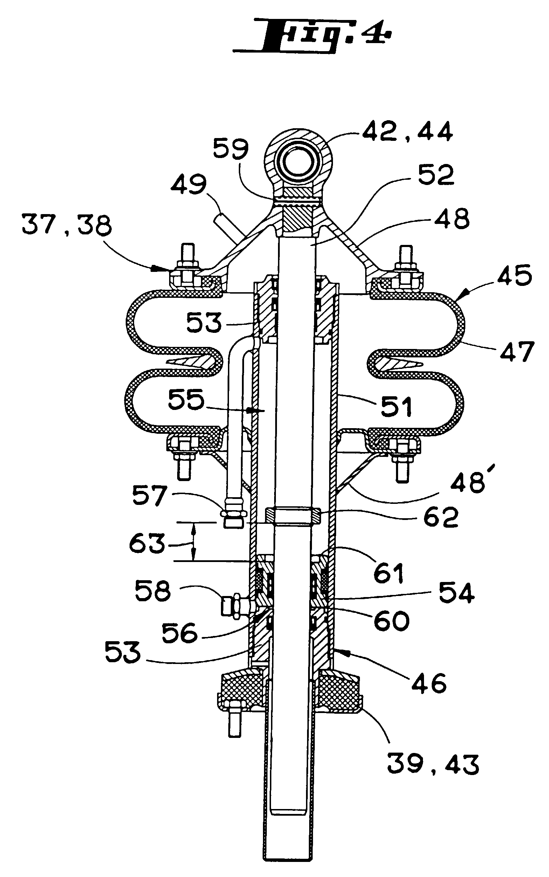

Un tel organe de levage et d'allégement (37, 38) apparaît sur les figures 4 et 5.

Celui-ci comporte un coussin d'air (45) (organe élastiquement déformable) servant, durant le travail, à alléger le mécanisme de récolte (15). Ce coussin d'air (45) est monté en parallèle avec un vérin de levage (46) permettant de lever ledit mécanisme de récolte (15) lorsque l'utilisateur le souhaite. Le coussin d'air (45) comporte une membrane circulaire déformable (47) et deux flasques (48, 48') liés chacun à une extrémité longitudinale correspondante de ladite membrane circulaire (47). Le coussin d'air (45) contient de l'air qui peut être amené à la pression désirée grâce à une valve (49) implantée sur l'un des flasques (48, 48'). En gonflant plus ou moins le coussin d'air (45) au travers de la valve (49), l'utilisateur a la possibilité d'adapter la valeur de l'allégement aux conditions de travail rencontrées. Cette opération ainsi que les moyens lui permettant de réaliser celle-ci seront décrits ultérieurement.

Le vérin de levage (46), quant à lui, comporte notamment un cylindre (51) et une tige (52). La tige (52) est fixée au flasque supérieur (48) du coussin d'air (45) au moyen d'une goupille (59), alors que le cylindre (51) est lié rigidement au flasque inférieur (48') dudit coussin d'air (45). A chacune de ses extrémités, le cylindre (51) est muni d'une bague de guidage étanche (53) permettant à la tige (52) de déboucher de part et d'autre du cylindre (51). Au travail, les deux flasques (48, 48') du coussin d'air (45) peuvent ainsi, suite aux déplacements en hauteur du mécanisme de récolte (15), se rapprocher ou s'éloigner l'un de l'autre étant donné que la tige (52) peut coulisser dans le cylindre (51).

Pour lever le mécanisme de récolte (15), il est prévu un piston (54) monté coulissant sur la tige (52) et séparant le cylindre (51) en deux chambres distinctes (55, 56) alimentées chacune au travers d'une conduite (57, 58) respective. Au travail, la chambre inférieure (56) du cylindre (51) est vide et la face inférieure (60) du piston (54) s'appuie, sous l'action de l'huile contenue dans la chambre supérieure (55), contre la bague de guidage inférieure (53). Par ailleurs, la face supérieure (61) du piston (54) est destinée à s'appuyer contre un collet (62) implanté un peu plus haut sur la tige (52) du vérin de levage (46). Etant donné qu'au travail il subsiste un certain jeu (63) entre la face supérieure (61) du piston (54) et le collet (62) de la tige (52), le piston (54) ne gêne pas le fonctionnement du coussin d'air (45). Lorsque l'utilisateur désire lever le mécanisme de récolte (15), il alimente la chambre inférieure (56) du cylindre (51), ce qui a pour effet de translater le piston (54) vers le haut et d'allonger le vérin de levage (46) dès que le piston (54) arrive en contact avec le collet (62) de la tige (52). Dans sa position levée, le mécanisme de récolte (15) s'étend au moins sensiblement parallèlement au-dessus du sol et l'action des coussins d'air (45) est annulée (figure 5).

L'animation des organes de coupe (33) et du rotor de traitement (34) du mécanisme de récolte (15) n'est pas décrite étant donné qu'elle est bien expliquée dans le document EP-A-0 570 316 notamment.

Il en est de même du dispositif d'orientation et de verrouillage de la roue (14) en position de transport. Ce dispositif est en effet bien expliqué dans le document EP-A-0 570 314 notamment.

Ainsi, dans la faucheuse (1) qui vient d'être décrite :
- la structure porteuse du mécanisme de récolte (15) est constituée par la structure d'attelage (3) et la roue (14);
- le dispositif de liaison est constitué par le premier organe de liaison (16) liant le mécanisme de récolte (15) à la structure d'attelage (3) et par le deuxième organe de liaison (17) liant le mécanisme de récolte (15) à la roue (14) ;
- le dispositif d'allégement est constitué par le premier organe de levage et d'allégement (37) et le deuxième organe de levage et d'allégement (38).

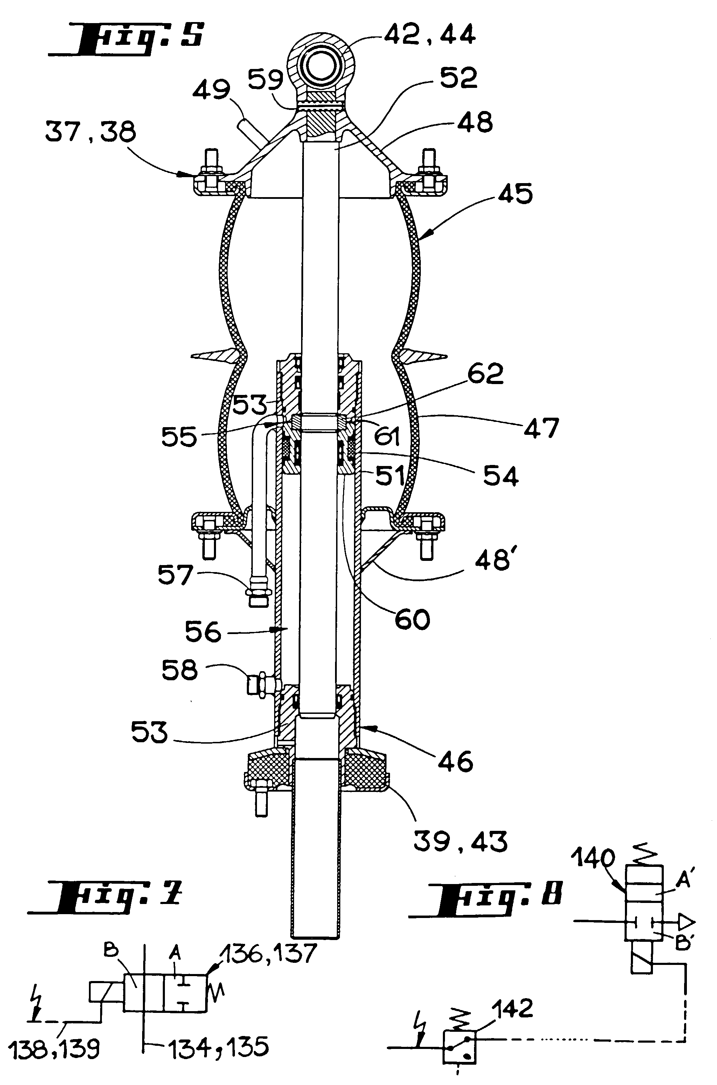

Selon l'invention, cette faucheuse (1) comporte en sus un dispositif (125) (figure 6) permettant de régler la pression de l'air contenu dans les coussins d'air (45) des organes de levage et d'allégement (37, 38) à partir du poste de conduite (126) du tracteur (2).

Le dispositif (125) de réglage de la pression comporte un circuit d'alimentation (127) destiné notamment à alimenter les coussins d'air (45) avec de l'air sous pression fourni par un compresseur (128). Ce compresseur (128) qui est embarqué sur la faucheuse (1), est entraîné par un moteur hydraulique (129) également embarqué sur la faucheuse (1). Ce moteur hydraulique (129) est lui-même animé par la centrale hydraulique (130) du tracteur (2) lorsque le compresseur (128) doit fournir de l'air au circuit (127). La centrale hydraulique (130) du tracteur (2) comporte, de manière connue, une pompe (131), un réservoir (132) et au moins un distributeur (133).

La mise en marche de l'animation du moteur hydraulique (129) est commandée par l'utilisateur à partir du poste de conduite (126) du tracteur (2) à l'aide du distributeur (133) adéquat.

Bien que le compresseur (128) soit équipé d'un filtre au niveau de son aspiration, il est important d'implanter celui-ci à un endroit où l'air à aspirer contienne le moins possible de poussières. A cet effet, il est prévu d'installer ledit compresseur (128) sur la structure d'attelage (3). Il se trouve ainsi relativement loin du mécanisme de récolte (15) généralement générateur de poussières.

A la sortie du compresseur (128), le circuit d'alimentation (127) se divise alors en deux branches (134, 135) :
- la première branche (134) alimente le coussin d'air (45) du premier organe de levage et d'allégement (37) et comporte une électrovanne (136) à deux positions (A, B) ;
- la deuxième branche (135) alimente le coussin d'air (45) du deuxième organe de levage et d'allégement (38) et comporte également une électrovanne (137) identique à l'électrovanne (136).

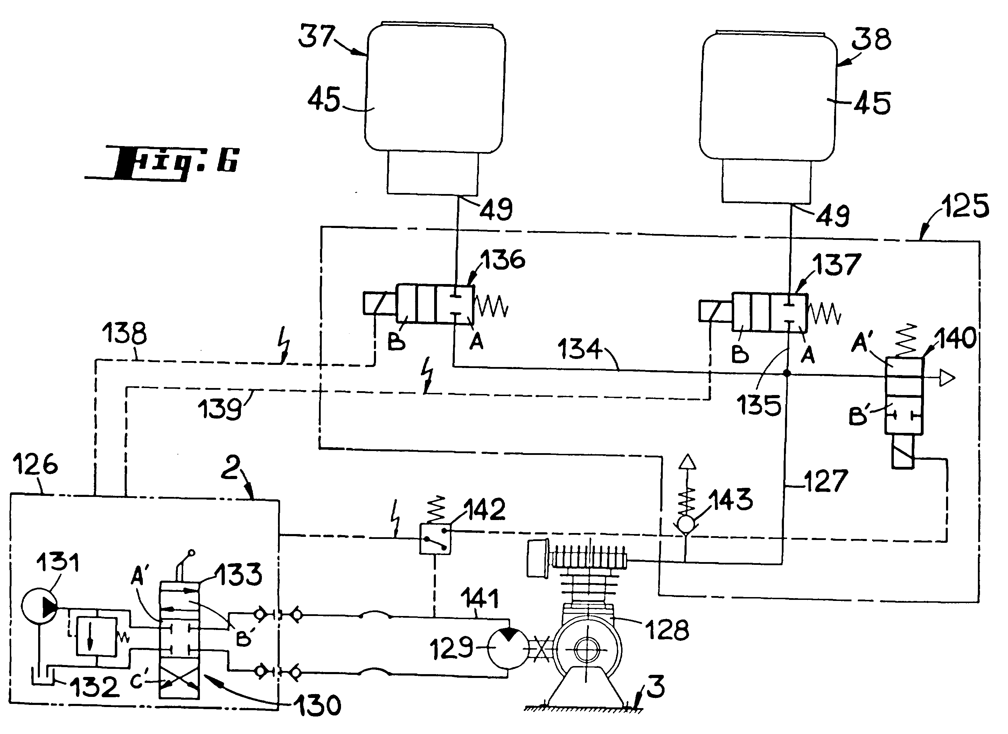

Ces électrovannes (136, 137) sont à commande électrique (138, 139) et peuvent donc être pilotées à partir du poste de conduite (126) du tracteur (2). Dans la première position (A) (figure 6) qui est la position neutre, l'air ne peut ni pénétrer dans, ni sortir du coussin d'air (45) correspondant. Dans la deuxième position (B) par contre (figure 7), qui est la position excitée, l'air peut, selon le cas, pénétrer dans ou sortir du coussin d'air (45) correspondant. Les électrovannes (136, 137) se placent dans la deuxième position (B) lorsque l'utilisateur actionne la commande électrique (138, 139) correspondante. Elles retournent par contre automatiquement dans la première position (A) dès que l'utilisateur n'actionne plus la commande électrique (138, 139) respective. Le fait de pouvoir commander séparément chaque électrovanne (136, 137) permet de régler exactement la valeur de la pression d'air à l'intérieur de chaque coussin d'air (45) en fonction de la charge qui y est appliquée. En cas de besoin, on pourra prévoir un manomètre qui permettra de visualiser la valeur de la pression dans chaque coussin d'air (45).

Entre le compresseur (128) et les deux électrovannes (136, 137) associées aux coussins d'air (45), le circuit d'alimentation (127) comporte encore une autre électrovanne (140) à deux positions (A', B'). Dans la première position (A') (figure 6) qui est la position neutre, le circuit d'alimentation (127) communique avec l'air libre. Dans la deuxième position (B') par contre (figure 8), qui est la position excitée, l'air ne peut pas s'échapper du circuit d'alimentation (127).

La mise de cette autre électrovanne (140) dans sa deuxième position (B') est pilotée de la manière suivante. Sur la conduite de pression (141), en amont du moteur hydraulique (129), est branchée un contacteur électrique à pression (142). Dès que l'utilisateur actionne le distributeur (133) du tracteur (2) pour mettre en marche l'animation du moteur hydraulique (129), la pression régnant dans la conduite (141) rend le contacteur électrique (142) passant (figure 8). L'électrovanne (140) est alimentée et se place dans la deuxième position (B') (figure 8). Lorsque l'animation du moteur hydraulique (129) est arrêtée le contacteur électrique (142) coupe à nouveau le courant électrique et l'électrovanne (140) retourne en position neutre (A').

En aval du compresseur (128), le circuit d'alimentation (127) comporte enfin encore une soupape de sécurité (143) protégeant les divers organes contre une pression excessive. L'échappement au niveau de cette soupape (143) se fait à l'air libre.

Ce dispositif (125) permettant de régler la pression de l'air contenu dans les coussins d'air (45) des organes de levage et d'allégement (37, 38) à partir du poste de conduite (126) du tracteur (2) fonctionne de la manière suivante.

Après avoir attelé la faucheuse (1) au tracteur (2), l'utilisateur contrôle manuellement la valeur de l'allégement du mécanisme de récolte (15). Pour ce faire, il soulève l'une après l'autre chaque extrémité longitudinale (18, 24) de celui-ci. Avec ce test, il apprécie si l'allégement du mécanisme de récolte (15) est sensiblement identique à chaque extrémité longitudinale (18, 24) de celui-ci et, compte tenu de son expérience, si la valeur de cet allégement est à peu près correcte. Au besoin, il fait une première correction sommaire.

Ainsi, au cas où l'allégement n'est pas sensiblement identique à chaque extrémité longitudinale (18, 24) du mécanisme de récolte (15), il procède au rééquilibrage en faisant sortir de l'air du coussin d'air (45) situé à l'extrémité longitudinale (18, 24) trop légère ou en insufflant de l'air dans le coussin d'air (45) situé à l'extrémité longitudinale (18, 24) trop lourde selon le cas.

Dans le premier cas, l'utilisateur commande, à partir du poste de conduite (126) du tracteur (2), l'électrovanne (136, 137) correspondant au coussin d'air (45) à dégonfler quelque peu. L'air sort alors dudit coussin d'air (45) et s'échappe à l'air libre au travers de l'électrovanne (136, 137) correspondante et de l'électrovanne (140).

Dans le deuxième cas par contre, l'utilisateur actionne la centrale hydraulique (130) du tracteur (2) et l'électrovanne (136, 137) correspondant au coussin d'air (45) à gonfler. Le compresseur (128) débite alors de l'air dans ledit coussin d'air (45) (la conduite (141) étant sous pression, l'électrovanne (140) est en position fermée (B')).

Si c'est la valeur de l'allégement qui n'est pas correcte, il insuffle de l'air dans les deux coussins d'air (45) au cas où l'allégement est insuffisant ou, au contraire, fait sortir de l'air des deux coussins d'air (45) au cas où l'allégement est trop important. Dans le premier cas, il actionnera la centrale hydraulique (130) du tracteur (2) et les deux électrovannes (136, 137) de sorte que le compresseur (128) débite de l'air dans les deux coussins d'air (45) (la conduite (141) étant sous pression, l'électrovanne (140) est en position fermée (B')). Dans le second cas par contre, il commande seulement les deux électrovannes (136, 137) pour faire sortir de l'air desdits coussins d'air (45).

Après ce premier réglage sommaire, l'utilisateur peut commencer le test de fauchage pour, au besoin, affiner ce premier réglage.

Si l'allégement est insuffisant, le mécanisme de récolte (15) repose trop lourdement sur le sol et génère des traces visibles sur le terrain. L'utilisateur actionne alors la centrale hydraulique (130) du tracteur (2) et les deux électrovannes (136, 137) pour insuffler de l'air dans les deux coussins d'air (45) jusqu'à ce que ces traces s'estompent ou disparaissent.

Par contre, si l'allégement est trop important, le mécanisme de récolte (15) ondoie et il en résulte une coupe irrégulière. L'utilisateur actionne alors seulement les deux électrovannes (136, 137) au moyen de leur commande électrique (138, 139) respective pour faire sortir de l'air des deux coussins d'air (45). Il arrête cette action dès que l'ondoiement du mécanisme de récolte (15) s'estompe ou disparaît.

Si l'une seule des extrémités longitudinales (18, 24) du mécanisme de récolte (15) est trop allégée, elle ondoie et il en résulte une coupe irrégulière dans son sillage. Pour remédier à cela, l'utilisateur actionne alors seulement l'électrovanne (136, 137) adéquate au moyen de la commande électrique (138, 139) de celle-ci pour faire sortir de l'air du coussin d'air (45) correspondant jusqu'à ce que la coupe soit régulière sur toute la largeur du mécanisme de récolte (15).

Si, au contraire, l'une seule des extrémités longitudinales (18, 24) du mécanisme de récolte est insuffisamment allégée, elle génère dans son sillage une trace visible sur le terrain. Pour éliminer celle-ci, l'utilisateur actionne la centrale hydraulique (130) du tracteur (2) et l'électrovanne (136, 137) correspondante afin d'insuffler de l'air dans le coussin d'air (45) respectif jusqu'à ce que la trace s'estompe ou disparaisse.

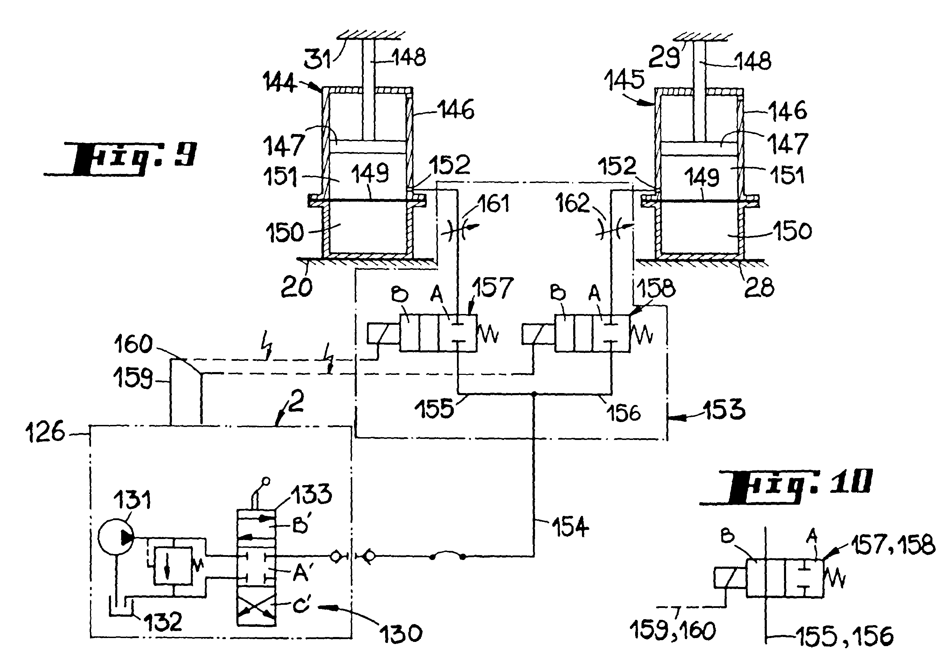

Les organes d'allégement (144, 145) du mécanisme de récolte (15) représentés schématiquement sur la figure 9, comportent chacun :
- un cylindre (146),
- un piston (147) solidaire d'une tige (148) sortant de l'une des extrémités longitudinales du cylindre (146),
- une membrane (149) séparant le volume interne du cylindre (146) non traversé par la tige (148) en une première chambre déformable (150) contenant un gaz (généralement de l'azote) et en une deuxième chambre déformable (151) destinée à recevoir de l'huile au travers d'un orifice d'entrée (152).

Le volume interne du cylindre (146) traversé par la tige (148) est, quant à lui, en communication avec l'air libre.

La pression du gaz contenu dans la première chambre (150) de chaque organe d'allégement (144, 145) peut être réglée par l'utilisateur à partir du poste de conduite (126) du tracteur (2) en injectant de l'huile dans la deuxième chambre (151) dudit organe d'allégement (144, 145) (augmentation de la pression du gaz contenu dans la première chambre (150), c'est-à-dire augmentation de l'allégement) ou, au contraire, en faisant sortir de l'huile de ladite deuxième chambre (151) (diminution de la pression du gaz contenu dans la première chambre (150), c'est-à-dire diminution de l'allégement). Ce réglage est effectué au moyen d'un dispositif de réglage (153).

Ce dispositif (153) de réglage de la pression comporte un circuit d'alimentation (154) destiné à alimenter la deuxième chambre (151) de chaque organe d'allégement (144, 145) en huile fournie par la centrale hydraulique (130) du tracteur (2). Ce circuit d'alimentation (154) comporte deux branches (155, 156) :
- la première branche (155) étant liée au premier organe d'allégement (144) et comportant une électrovanne (157) à deux positions (A, B) ;
- la deuxième branche (156) étant liée au deuxième organe d'allégement (145) et comportant une électrovanne (158) à deux positions (A, B) identique à l'électrovanne (157).

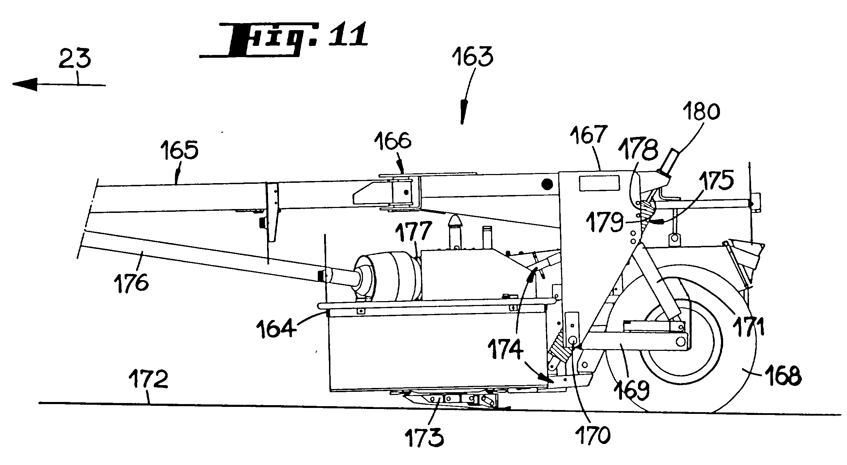

Ces électrovannes (157, 158) sont à commande électrique (159, 160) et peuvent être manoeuvrées à partir du poste de conduite (126) du tracteur (2). Lorsque l'utilisateur n'actionne pas les électrovannes (157, 158), celles-ci sont dans leur première position (A) (figure 9) dans laquelle aucune circulation d'huile n'est possible, ni dans un sens, ni dans l'autre (le distributeur (133) de la centrale hydraulique (130) du tracteur (2) se trouve en position neutre (A')). Lorsque l'utilisateur veut faire pénétrer de l'huile dans la deuxième chambre (151) d'un organe d'allégement (144, 145), il actionne électriquement l'électrovanne (157, 158) correspondante pour que celle-ci se place en position (B) (figure 10) et il actionne simultanément la centrale hydraulique (130) du tracteur (2) (distributeur (133) en position (B')) pour que la pompe (131) de celle-ci fournisse de l'huile à la branche (155, 156) correspondante. Lorsque, au contraire, l'utilisateur veut faire sortir de l'huile de la deuxième chambre (151) d'un organe d'allégement (144, 145), il actionne électriquement l'électrovanne (157, 158) correspondante pour que celle-ci se place en postion (B) (figure 10) et il actionne simultanément la centrale hydraulique (130) du tracteur (2) (distributeur (133) en position (C')) pour permettre à l'huile qui doit sortir de la deuxième chambre (151), de retourner au réservoir (132) de la centrale hydraulique (130) de tracteur (2).

Entre chaque électrovanne (157, 158) et l'organe d'allégement (144, 145) correspondant, le circuit d'alimentation (154) comporte encore un étranglement (161, 162), de section réglable, freinant la circulation de l'huile pour faciliter le réglage.

On comprendra toutefois que cet étranglement (161, 162) qui n'est cependant pas indispensable, pourrait également être situé en amont de l'électrovanne (157, 158) correspondante. Il pourrait même n'être prévu qu'un seul étranglement situé en amont des deux branches (155, 156).

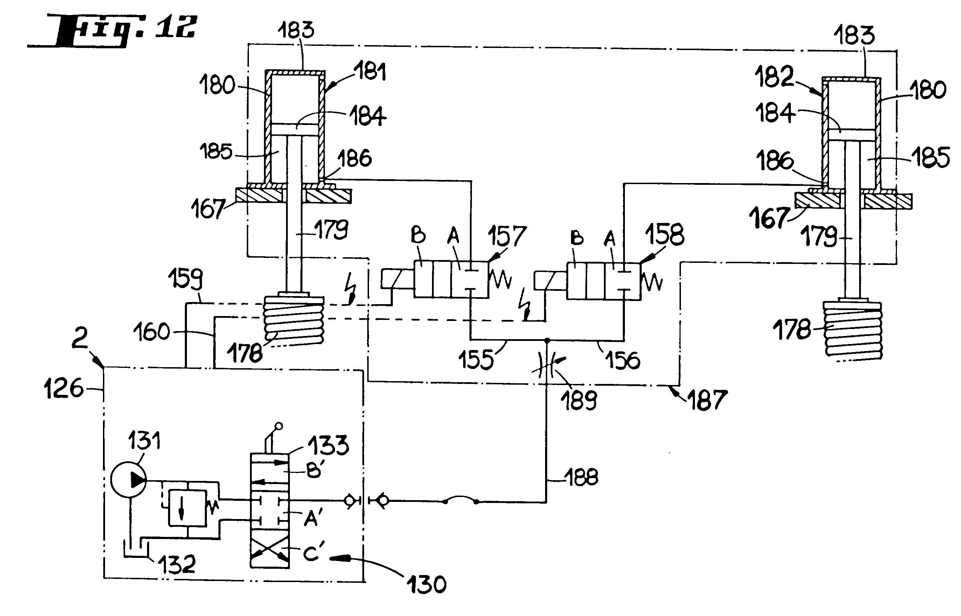

Sur les figures 11 et 12 est représentée une deuxième faucheuse (163) qui se trouve en position de travail. Elle se compose d'un corps (164) et d'un timon (165) lié, à son extrémité arrière, au corps (164) au moyen d'une articulation (166) d'axe géométrique au moins sensiblement vertical.

La position angulaire du timon (165) par rapport au corps (164) peut être modifiée en faisant pivoter le timon (165) autour de l'axe de l'articulation (166). La mise dans la position angulaire souhaitée et le maintien dans celle-ci sont réalisés par un vérin hydraulique par exemple (non représenté).

Le corps (164) de la faucheuse (163) comporte un châssis (167) qui s'appuie sur le sol -notamment au travail- au moyen de deux roues (168) qui s'étendent chacune près d'une extrémité extérieure respective dudit châssis (167). Chaque roue (168) est liée au châssis (167) au moyen d'un bras de roue (169) lui-même lié audit châssis (167) au moyen d'une articulation (170) d'axe géométrique dirigé au moins sensiblement orthogonalement à la direction d'avance (23) au travail. Les axes géométriques des articulations (170) des deux bras de roues (169) sont au moins sensiblement confondus. Entre chaque bras de roue (169) et le châssis (167) est par ailleurs prévu un vérin hydraulique (171) qui permet de faire pivoter le bras de roue (169) et la roue (168) correspondante par rapport au châssis (167) autour de l'axe géométrique de l'articulation (170) correspondante. Ceci permet au châssis (167) d'être approché du sol (172) pendant la phase de fauchage et d'être éloigné du sol (172) lorsque le fauchage est interrrompu.

Le corps (164) de la faucheuse (163) comporte par ailleurs un mécanisme de récolte (173) muni, de manière connue, d'organes de coupe et d'organes de traitement du produit coupé par les organes de coupe, tels que des organes de conditionnement par exemple. Ce mécanisme de récolte (173) est lié au châssis (167) au moyen d'un dispositif de liaison (174) à quadrilatère déformable et d'un dispositif d'allégement (175) qui sera décrit ultérieurement.

L'animation du mécanisme de récolte (173) est par exemple réalisée à partir de la prise de force d'un tracteur (2) par l'intermédiaire d'un dispositif de transmission du mouvement connu de l'homme de l'art, qui transmet le mouvement à un arbre de transmission (176) lié en rotation à l'arbre d'entrée d'un carter d'entrée (177) du mécanisme de récolte (173).

Le dispositif d'allégement (175) collabore avec le dispositif de liaison (174) et comporte, à chaque extrémité longitudinale du mécanisme de récolte (173) un ressort de traction (178).

Chaque ressort de traction (178) est lié, à son extrémité inférieure, à une barre du dispositif de liaison (174) et, à son extrémité supérieure, directement ou indirectement à la tige (179) d'un vérin hydraulique (180) lui-même lié au châssis (167).

Dans la faucheuse (163) qui vient d'être décrite :
- la structure porteuse du mécanisme de récolte (173) est constituée par le timon (165), le châssis (167), les roues (168) et leurs organes de liaison au - châssis (167) (bras de roue (169) - vérin (171));
- le dispoditif d'allégement est constitué par les deux organes d'allégement (181, 182) (figure 12) comportant chacun un ressort de traction (178) et le vérin hydraulique (180) associé.

Chaque vérin hydraulique (180) comporte :
- un cylindre (183) lié au châssis (167),
- un piston (184) solidaire de la tige (179) sortant de l'une des extrémités du cylindre (183) et liée, à son extrémité libre, au ressort de traction (178) correspondant.

La petite chambre (185) du vérin hydraulique (180) est destinée à recevoir de l'huile au travers d'un orifice d'entrée (186). La grandre chambre du vérin hydraulique (180), quant à elle, est en communication avec l'air libre.

L'action du ressort (178) de chaque organe d'allégement (181, 182) peut être réglée par l'utilisateur à partir du poste de conduite (126) du tracteur (2) en injectant de l'huile dans la petite chambre (185) du vérin hydraulique (180) correspondant (augmentation du volume de la petite chambre (185), c'est-à-dire allongement du ressort de traction (178) et, de ce fait, augmentation de l'allégement) ou, au contraire, en faisant sortir de l'huile de ladite petite chambre (185) (diminution du volume de la petite chambre (185), c'est-à-dire raccourcissement du ressort de traction (178) et, de ce fait, diminution de l'allégement).

Ce réglage est effectué au moyen d'un dispositif de réglage (187) qui comporte un circuit d'alimentation (188) destiné à alimenter la petite chambre (185) du vérin hydraulique (180) de chaque organe d'allégement (181, 182) en huile fournie par la centrale hydraulique (130) du tracteur (2). Ce circuit d'alimentation (188) est identique au circuit d'alimentation (154) décrit précédemment, sauf en ce qui concerne l'étranglement réglable (189) qui est ici situé en amont des deux branches (155, 156).

Le fonctionnement du dispositif de réglage (187) ne sera pas redécrit étant donné qu'il est identique à celui du dispositif de réglage (153) précédemment décrit.

La commande électrique (138, 139 ; 159, 160) des électrovannes (136, 137 ; 157, 158) n'est pas décrite car elle est à la portée de l'homme du métier. Il s'agit en effet de simples contacteurs qui, lorsqu'ils sont actionnés, alimentent en courant électrique les solénoïdes correspondants desdites électrovannes (136, 137 ; 157, 158).

Diverses modifications peuvent être apportées aux exemples de réalisation qui viennent d'être décrits sans qu'on sorte pour autant du cadre général de la présente invention tel que défini dans les revendicatons suivantes.

C'est ainsi, par exemple, qu'il est parfaitement possible d'utiliser des organes d'allégement avec une enveloppe déformable contenant un gaz sous pression sur des faucheuses du type de celle représentée sur la figure 11 en lieu et place des organes d'allégement (181, 182).

Dans la faucheuse représentée sur les figures 11 et 12, il est également possible d'utiliser des ressorts de compression ou des barres de torsion en lieu et place des ressorts de traction (178).

## Revendications

1. Faucheuse comportant :
- un mécanisme de récolte (15) s'étendant, au cours du fauchage, transversalement à la direction de travail (23),
- une structure porteuse (3, 14) comportant notamment un moyen de liaison (3) destiné à lier la faucheuse à un véhicule moteur.
- un dispositif de liaison (16, 17) liant le mécanisme de récolte (15) à la structure porteuse (3, 14) de sorte à autoriser un déplacement en hauteur dudit mécanisme de récolte (15) par rapport à la structure porteuse (3, 14), et
- un dispositif d'allégement (37, 38 ; 144, 145) du mécanisme de récolte (15) comprenant un (plusieurs) organe(s) élastiquement déformable(s) (45 ; 144, 145) dont l'action (de chacun) peut être réglée à l'aide d'un dispositif de réglage (125 ; 153) accouplé audit (auxdits) organe(s) élastiquement déformable(s) (45 ; 144, 145) qui (dont chacun) est constitué d'une enveloppe déformable (47-48' ; 146-151) contenant un gaz sous pression réglable, ledit dispositif de réglage (125 ; 153) comportant notamment un circuit d'alimentation (127 ; 154) muni d'une vanne (136, 137 ; 157, 158) associée à ladite (par) enveloppe déformable (47-48'; 146-151) et destinée, en vue du réglage de la valeur de la pression du gaz contenu dans ladite enveloppe déformable (47-48'; 146-151), à faire pénétrer dans l'enveloppe déformable (47-48' ; 146-151) un fluide délivré par une source d'alimentation (128 ; 130), à maintenir la pression du gaz contenu dans l'enveloppe déformable (47- 48' ; 146-151) ou à faire sortir du fluide de ladite enveloppe déformable (47-48' ; 146-151),
**caractérisée** en ce que ladite (chaque) vanne (136, 137 ; 157, 158) est une électrovanne pilotable électriquement par l'utilisateur à partir du poste de conduite (126) du véhicule moteur (2) et comportant au moins deux positions (A,B):
- une première position (A) dans laquelle du fluide ne peut ni pénétrer, ni sortir de l'enveloppe déformable (47- 48' ; 146-151);
- une deuxième position (B) dans laquelle du fluide peut pénétrer ou sortir de l'enveloppe déformable (47- 48' ; 146-151).

2. Faucheuse selon la revendication 1, **caractérisée** en ce que la première position (A) est une position neutre, tandis que la deuxième position (B) est une position excitée.

3. Faucheuse selon la revendication 1 ou 2, **caractérisée** en ce que l'enveloppe déformable (47-48') est constituée d'un coussin d'air (45).

4. Faucheuse selon la revendication 3, **caractérisée** en ce que le circuit d'alimentation (127) comporte, en amont de la (des) vanne(s) (136, 137) associée(s) au(x) coussin(s) d'air (45), une autre vanne (140) branchée en série avec ladite (lesdites) vanne(s) (136, 137) et comportant :
- une première position (A') dans laquelle l'air peut s'échapper ;
- une deuxième position (B') dans laquelle l'air ne peut pas s'échapper.

5. Faucheuse selon la revendication 4, **caractérisée** en ce que cette autre vanne (140) est une électrovanne.

6. Faucheuse selon la revendication 5, **caractérisée** en ce que la première position (A') est une position neutre, tandis que la deuxième position (B') est une position excitée.

7. Faucheuse selon l'une quelconque des revendications 3 à 6, **caractérisée** en ce que l'échappement de l'air contenu dans le (les) coussin(s) d'air (45) se fait à l'air libre.

8. Faucheuse selon l'une quelconque des revendications 3 à 7, **caractérisée** en ce que le circuit d'alimentation (127) comporte, en amont de la (des) vannes(s) (136, 137) associée(s) au (aux) coussin(s) d'air (45), une soupape de sécurité (143).

9. Faucheuse selon l'une quelconque des revendications 3 à 8, **caractérisée** en ce que la source d'alimentation comporte un compresseur d'air (128) monté sur la faucheuse.

10. Faucheuse selon la revendication 9, **caractérisée** en ce que le compresseur d'air (128) est entraîné par un moteur auxiliaire (129) également monté sur la faucheuse.

11. Faucheuse selon la revendication 10 et l'une quelconque des revendications 4 à 6, **caractérisée** en ce qu'il est prévu un moyen (142) provoquant la mise de l'autre vanne (140) dans sa deuxième position (B') lorsque le moteur auxiliaire (129) est actionné.

12. Faucheuse selon la revendication 10 ou 11, **caractérisée** en ce que le moteur auxiliaire est un moteur électrique.

13. Faucheuse selon les revendications 12, 11 et 5 ou 6, **caractérisée** en ce que ledit moyen est constitué d'une simple liaison électrique.

14. Faucheuse selon la revendication 10 ou 11, **caractérisée** en ce que le moteur auxiliaire est un moteur hydraulique (129).

15. Faucheuse selon les revendications 14, 11 et 5 ou 6, **caractérisée** en ce que ledit moyen est constitué d'un contacteur électrique à pression (142).

16. Faucheuse selon la revendication 1 ou 2, **caractérisée** en ce que l'enveloppe déformable (146-151) est constituée d'un vérin hydraulique (146-149, 151) et d'un accumulateur à gaz (146, 149, 150) montés en série.

17. Faucheuse comportant :
- un mécanisme de récolte (173) s'étendant, au cours du fauchage, transversalement à la direction du travail (23),
- une structure porteuse (165, 167-169, 171) comportant notamment un moyen de liaison (165) destiné à lier la faucheuse à un véhicule moteur (2),
- un dispositif de liaison (174) liant le mécanisme de récolte (173) à la structure porteuse (165, 167-169, 171) de sorte à autoriser un déplacement en hauteur dudit mécanisme de récolte (173) par rapport à la structure porteuse (165, 167-169, 171), et
- un dispositif d'allégement (181, 182) du mécanisme de récolte (173) comprenant un (plusieurs) organe(s) élastiquement déformable(s) (178) dont l'action (de chacun) peut être réglée à l'aide d'un dispositif de réglage (187) accouplé audit (auxdits) organe(s) élastiquement déformable(s) (178) qui (dont chacun) est constitué d'un ressort mécanique (178),
**caractérisée** en ce que ledit dispositif de réglage (187) comporte un vérin (180) associé audit (pour chaque) ressort mécanique (178), ainsi qu'un circuit d'alimentation (188) muni d'une vanne (157, 158) associée audit (par) vérin (180) et destinée, en vue du réglage de l'action du ressort mécanique (178) correspondant à faire pénétrer dans le vérin (180) du fluide délivré par une source d'alimentation (130), à maintenir le fluide dans ledit vérin (180) ou à faire sortir du fluide dudit vérin (180), ladite (chaque) vanne (157, 158) étant pilotable par l'utilisateur à partir du poste de conduite (126) du véhicule moteur (2) et comportant au moins deux positions (A, B) :
- une première position (A) dans laquelle le fluide ne peut ni pénétrer, ni sortir du vérin (180),
- une deuxième position (B) dans laquelle du fluide peut pénétrer ou sortir du vérin (180).

18. Faucheuse selon la revendication 17, **caractérisée** en ce que ladite (lesdites) vanne(s) (157, 158) est (sont) une (des) électrovanne(s) pilotée(s) électriquement par l'utilisateur.

19. Faucheuse selon la revendication 18, **caractérisée** en ce que la première position (A) est une position neutre, tandis que la deuxième position (B) est une position excitée.

20. Faucheuse selon l'une quelconque des revendications 17 à 19, **caractérisée** en ce que le(s) vérin(s) est (sont) un (des) vérin(s) hydraulique(s) (180), le fluide étant de l'huile.

21. Faucheuse selon la revendication 16 ou 20, **caractérisée** en ce qu'il est prévu un étranglement (161, 162 ; 189), de préférence réglable, en amont du vérin hydraulique (146-149, 151; 180).

22. Faucheuse selon l'une quelconque des revendications 1 à 21, **caractérisée** en ce qu'il est prévu au moins deux organes élastiquement déformables (45 ; 144, 145 ; 178) dont l'action peut être réglée individuellement ou simultanément.

23. Faucheuse selon la revendication 22, **caractérisée** en ce qu'il est prévu un organe élastiquement déformable (45 ; 144, 145 ; 178) près de chaque extrémité au moins du mécanisme de récolte (15 ; 173).

## Patentansprüche

1. Mähmaschine mit:
- einem Erntemechanismus (15), der sich während des Mähens quer zur Arbeitsrichtung (23) erstreckt,
- einer Tragvorrichtung (3, 14), die insbesondere ein Verbindungsmittel (3) umfaßt, das dazu bestimmt ist, die Mähmaschine mit einem Motorfahrzeug zu verbinden,
- einer Verbindungsvorrichtung (16 17), die den Erntemechanismus (15) mit der Tragvorrichtung (3, 14) so verbindet, daß sie eine Bewegung des Erntemechanismus (15) relativ zur Tragvorrichtung (3, 14) in der Höhe zuläßt, und
- einer Vorrichtung zur Entlastung (37, 38; 144, 145) des Erntemechanismus (15) mit einem (mehreren) elastisch verformbaren Element (Elementen) (45; 144, 145), dessen (deren) Wirkung (jeweils) mittels einer Einstellvorrichtung (125; 153) eingestellt werden kann, die mit dem (den) elastisch verformbaren Element (Elementen) (45; 144, 145) gekuppelt ist, das (die jeweils) aus einer verformbaren Hülle (47-48'; 146-151) besteht (bestehen), die ein Gas unter einstellbarem Druck enthält, wobei die Einstellvorrichtung (125; 153) insbesondere einer Versorgungskreis (127; 154) aufweist, der mit einem Ventil (136, 137; 157, 158) ausgestattet ist, das mit der (jeder) verformbaren Hülle (47-48'; 146-151) verbunden und dazu bestimmt ist, hinsichtlich der Einstellung des Druckwertes des in der verformbaren Hülle (47-48'; 146-151) enthaltenen Gases ein von einer Versorgungsquelle (128; 130) geliefertes Fluid in die verformbare Hülle (47-48'; 146-151) eindringen zu lassen, um den Druck des in der verformbaren Hülle (47-48'; 146-151) enthaltenen Gases aufrechtzuerhalten, oder um Fluid aus der verformbaren Hülle (47-48'; 146-151) austreten zu lassen,
***dadurch gekennzeichnet,*** daß das (jedes) Ventil (136, 137; 157, 158) ein von dem Benutzer vom Führerstand (126) des Motorfahrzeugs (2) aus elektrisch steuerbares Elektroventil ist und zumindest zwei Stellungen (A, B) aufweist:
- eine erste Stellung (A), in der das Fluid weder eindringen noch aus der verformbaren Hülle (47-48'; 146-151) austreten kann;
- eine zweite Stellung (B), in der Fluid eindringen oder aus der verformbaren Hülle (47-48'; 146-151) austreten kann.

2. Mähmaschine gemäß Anspruch 1, ***dadurch gekennzeichnet,*** daß die erste Stellung (A) eine neutrale Stellung ist, während die zweite Stellung (B) eine erregte Stellung ist.

3. Mähmaschine gemäß Anspruch 1 oder 2, ***dadurch gekennzeichnet,*** daß die verformbare Hülle (47-48') von einer Luftfeder (45) gebildet wird.

4. Mähmaschine gemäß Anspruch 3, ***dadurch gekennzeichnet,*** daß der Versorgungskreis (127) stromauf von dem (den) mit der (den) Luftfeder(n) (45) verbundenen Ventile(n) (136, 137) ein weiteres mit dem (den) Ventil(en) (136, 137) in Reihe angeschlossenes Ventil (140) umfaßt, das
- eine erste Stellung (A'), in der die Luft entweichen kann;
- eine zweite Stellung (B'), in der die Luft nicht entweichen kann, aufweist.

5. Mähmaschine gemäß Anspruch 4, ***dadurch gekennzeichnet,*** daß dieses weitere Ventil (140) ein Elektroventil ist.

6. Mähmaschine gemäß Anspruch 5,***dadurch gekennzeichnet,*** daß die erste Stellung (A') eine neutrale Stellung ist, während die zweite Stellung (B') eine erregte Stellung ist.

7. Mähmaschine gemäß irgend einem der Ansprüche 3 bis 6, ***dadurch gekennzeichnet,*** daß das Entweichen der in der (den) Luftfeder(n) (45) enthaltenen Luft an die Umgebungsluft erfolgt.

8. Mähmaschine gemäß irgend einem der Ansprüche 3 bis 7, ***dadurch gekennzeichnet,*** daß der Versorgungskreis (127) stromauf von dem (den) Ventil(en) (136, 137), das (die) mit der (den) Luftfeder(n) (45) verbunden ist (sind) ein Sicherheitsventil (143) aufweist.

9. Mähmaschine gemäß irgend einem der Ansprüche 3 bis 8, ***dadurch gekennzeichnet,*** daß die Versorgungsquelle einen Luftkompressor (128) umfaßt, der auf der Mähmaschine montiert ist.

10. Mähmaschine gemäß Anspruch 9, ***dadurch gekennzeichnet,*** daß der Luftkompressor (128) von einem ebenfalls auf der Mähmaschine montierten Hilfsmotor (129) angetrieben wird.

11. Mähmaschine gemäß Anspruch 10 und irgend einem der Ansprüche 4 bis 6,
***dadurch gekennzeichnet,*** daß ein Mittel (142) vorgesehen ist, daß das Verbringen des weiteren Ventils (140) in seine zweite Stellung (B') hervorruft, wenn der Hilfsmotor (129) betätigt wird.

12. Mähmaschine gemäß Anspruch 10 oder 11, ***dadurch gekennzeichnet,*** daß der Hilfsmotor ein Elektromotor ist.

13. Mähmaschine gemäß Ansprüche 12 in Kombination mit Anspruch 11, ***dadurch gekennzeichnet,*** daß das Mittel aus einer einfachen elektrischen Verbindung besteht.

14. Mähmaschine gemäß Anspruch 10 oder 11, ***dadurch gekennzeichnet,*** daß der Hilfsmotor ein Hydraulikmotor (129) ist

15. Mähmaschine gemäß Ansprüche 14 in Kombination mit Anspruch 11, ***dadurch gekennzeichnet,*** daß das Mittel aus einem elektrischen Druckschalter (142) besteht.

16. Mähmaschine gemäß Anspruch 1 oder 2, ***dadurch gekennzeichnet,*** daß die verformbare Hülle (146-151) aus einem Hydraulikzylinder (146-149, 151) und einem Gasspeicher (146, 149, 150) besteht, die in Reihe angeordnet sind.

17. Mähmaschine mit:
- einem Erntemechanismus (173), der sich während des Mähens quer zur Arbeitsrichtung (23) erstreckt,
- einer Tragvorrichtung (165, 167-169, 171), die insbesondere ein Verbindungsmittel (165) umfaßt, das dazu bestimmt ist, die Mähmaschine mit einem Motorfahrzeug (2) zu verbinden,
- einer Verbindungsvorrichtung (174), die den Erntemechanismus (173) mit der Tragvorrichtung (165, 167-169, 171) so verbindet, daß sie eine Bewegung des Erntemechanismus (173) relativ zur Tragvorrichtung (165, 167-169, 171) in der Höhe zuläßt, und
- einer Vorrichtung zur Entlastung (181, 182) des Erntemechanismus (173) mit einem (mehreren) elastisch verformbaren Element (Elementen) (178), dessen (deren) Wirkung (jeweils) mittels einer Einstellvorrichtung (187) eingestellt werden kann, die mit dem (den) elastisch verformbaren Element (Elementen) (178) gekuppelt ist, das (die jeweils) aus einer mechanischen Feder (178) besteht (bestehen),
***dadurch gekennzeichnet,*** daß die Einstellvorrichtung (187) einen Arbeitszylinder (180), der mit der (jeder) mechanischen Feder (178) verbunden ist, sowie ein Versorgungskreis (188) aufweist, der mit einem Ventil (157, 158) ausgestattet ist, das mit dem (jedem) Arbeitszylinder (180) verbunden und dazu bestimmt ist, hinsichtlich der Einstellung der Wirkung der entsprechenden mechanischen Feder (178) von einer Versorgungsquelle (130) geliefertes Fluid in den Arbeitszylinder (180) eindringen zu lassen, um das Fluid in dem Arbeitszylinder (180) zu halten oder um Fluid aus dem Arbeitszylinder (180) austreten zu lassen, wobei das (jedes) Ventil (157, 158) von dem Benutzer vom Führerstand (126) des Motorfahrzeugs (2) aus steuerbar ist und zumindest zwei Stellungen (A, B) aufweist:
- eine erste Stellung (A), in der das Fluid weder eindringen noch aus dem Arbeitszylinder (180) austreten kann,
- eine zweite Stellung (B), in der Fluid eintreten oder aus dem Arbeitszylinder (180) austreten kann.

18. Mähmaschine gemäß Anspruch 17, ***dadurch gekennzeichnet,*** daß das (die) Ventil(e) (157, 158) ein von dem Benutzer elektrisch gesteuerte(s) Elektroventil(e) ist (sind).

19. Mähmaschine gemäß Anspruch 18, ***dadurch gekennzeichnet,*** daß die erste Stellung (A) eine neutrale Stellung ist, während die zweite Stellung (B) eine erregte Stellung ist.

20. Mähmaschine gemäß irgend einem der Ansprüche 17 bis 19, ***dadurch gekennzeichnet,*** daß der (die) Arbeitszylinder ein Hydraulikzylinder (180) ist (sind), wobei das Fluid Öl ist.

21. Mähmaschine gemäß Anspruch 16 oder 20, ***dadurch gekennzeichnet,*** daß stromauf vom Hydraulikzylinder (146-149, 151; 180) eine vorzugsweise einstellbare Drosselung (161, 162; 189) vorgesehen ist.

22. Mähmaschine gemäß irgend einem der Ansprüche 1 bis 21, ***dadurch gekennzeichnet,*** daß zumindest zwei elastisch verformbare Elemente- (45; 144, 145; 178) vorgesehen sind, deren Wirkung individuell oder gleichzeitig eingestellt werden kann.

23. Mähmaschine gemäß Anspruch 22, ***dadurch gekennzeichnet,*** daß ein elastisch verformbares Element (45; 144, 145; 178) nahe von zumindest jedem Ende des Erntemechanismus (15; 173) vorgesehen ist.

## Claims

1. Mower comprising:
- a harvesting mechanism (15) extending, during mowing, transversely to the direction of work (23),
- a carrying structure (3, 14) comprising, in particular, a connecting means (3) intended to connect the mower to a motor vehicle,
- a connecting device (16, 17) connecting the harvesting mechanism (15) to the carrying structure (3, 14) in such a way as to allow the said harvesting mechanism (15) to be moved heightwise with respect to the carrying structure (3, 14), and
- a device (37, 38; 144, 145) for lightening the harvesting mechanism (15), comprising one (several) elastically deformable element(s) (45; 144, 145), the action of (each of) which can be adjusted using an adjusting device (125; 153) coupled to the said elastically deformable element(s) (45; 144, 145) (each of) which consists of a deformable casing (47-48'; 146-151) containing a gas under adjustable pressure, the said adjusting device (125; 153) in particular comprising a supply circuit (127; 154) equipped with a valve (136, 137; 157, 158) associated with the said (each) deformable casing (47-48'; 146-151) and intended, with a view to adjusting the amount of the pressure of the gas contained in the said deformable casing (47-48'; 146-151), to cause a fluid delivered by a supply source (128; 130) to enter the deformable casing (47-48'; 146-151), to maintain the pressure of the gas contained in the deformable casing (47-48'; 146-151) or to cause fluid to leave the each deformable casing (47-48'; 146-151),
***characterized in that*** the said (each) valve (136, 137; 157, 158) is an electrically operated valve that can be controlled electrically by the user from the driving position (126) on the motor vehicle (2) and comprising at least two positions (A, B):
- a first position (A) in which fluid can neither enter nor leave the deformable casing (47-48'; 146-151);
- a second position (B) in which fluid can enter or leave the deformable casing (47-48'; 146-151).

2. Mower according to Claim 1, ***characterized in*** that the first position (A) is a neutral position, whereas the second position (B) is an energized position.

3. Mower according to Claim 1 or 2, *characterized in* that the deformable casing (47-48') consists of an air cushion (45).

4. Mower according to Claim 3, ***characterized in*** that the supply circuit (127) comprises, upstream of the valve(s) (136, 137) associated with the air cushion(s) (45), another valve (140) connected in series with the said valve(s) (136, 137) and comprising:
- a first position (A') in which air can escape;
- a second position (B') in which air cannot escape.

5. Mower according to Claim 4, ***characterized in*** that this other valve (140) is an electrically operated valve.

6. Mower according to Claim 5, ***characterized in*** that the first position (A') is a neutral position, whereas the second position (B') is an energized position.

7. Mower according to any one of Claims 3 to 6, ***characterized in*** that the air contained in the air cushion(s) (45) escapes to the open air.

8. Mower according to any one of Claims 3 to 7, ***characterized in*** that the supply circuit (127) comprises, upstream of the valve(s) (136, 137) associated with the air cushion(s) (45), a safety valve (143).

9. Mower according to any one of Claims 3 to 8, ***characterized in*** that the supply source comprises an air compressor (128) mounted on the mower.

10. Mower according to Claim 9, ***characterized in*** that the air compressor (128) is driven by an auxiliary motor (129) also mounted on the mower.

11. Mower according to Claim 10 and any one of Claims 4 to 6, ***characterized in*** that a means (142) causing the other valve (140) to switch into its second position (B') when the auxiliary motor (129) is actuated is provided.

12. Mower according to Claim 10 or 11, ***characterized in*** that the auxiliary motor is an electric motor.

13. Mower according to Claims 12 combined with Claim 11, ***characterized in*** that the said means consists of a simple electrical connection.

14. Mower according to Claim 10 or 11, ***characterized in*** that the auxiliary motor is a hydraulic motor (129).

15. Mower according to Claim 14 combined with Claim 11, ***characterized in*** that the said means consists of an electric pressure contactor (142).

16. Mower according to Claim 1 or 2, ***characterized in*** that the deformable casing (146-151) consists of a hydraulic jack (146-149, 151) and of a gas accumulator (146, 149, 150) mounted in series.

17. Mower comprising:
- a harvesting mechanism (173) extending, during mowing, transversely to the direction of work (23),
- a carrying structure (165, 167-169, 171) comprising, in particular, a connecting means (165) intended to connect the mower to a motor vehicle (2),
- a connecting device (174) connecting the harvesting mechanism (173) to the carrying structure (165, 167-169, 171) in such a way as to allow the said harvesting mechanism (173) to be moved heightwise with respect to the carrying structure (165, 167-169, 171), and
- a device (181, 182) for lightening the harvesting mechanism (173), comprising one (several) elastically deformable element(s) (178), the action of (each of) which can be adjusted using an adjusting device (187) coupled to the said elastically deformable element(s) (178) (each of) which consists of a mechanical spring (178),
***characterized in*** that the said adjusting device (187) comprises a jack (180) associated with the said (for each) mechanical spring (178), and a supply circuit (188) equipped with a valve (157, 158) associated with the said (each) jack (180) and intended, with a view to adjusting the action of the corresponding mechanical spring (178), to cause fluid delivered by a supply source (130) to enter the jack (180), to maintain the fluid in the said jack (180) or to cause fluid to leave the said jack (180), the said (each) valve (157, 158) being controllable by the user from the driving position (126) on the motor vehicle (2) and comprising at least two positions (A, B):
- a first position (A) in which fluid can neither enter nor leave the jack (180);
- a second position (B) in which fluid can enter or leave the jack (180).

18. Mower according to Claim 17, ***characterized in*** that the said valve(s) (157, 158) is an (are) electrically operated valve(s) controlled electrically by the user.

19. Mower according to Claim 18, ***characterized in*** that the first position (A) is a neutral position, whereas the second position (B) is an energized position.

20. Mower according to any one of Claims 17 to ***19, characterized in*** that the jack(s) is a (are) hydraulic jack(s) (180), the fluid being oil.

21. Mower according to Claim 16 or 20, ***characterized in*** that a restrictor (161, 162; 189), preferably an adjustable restrictor, is provided upstream of the hydraulic jack (146-159, 151; 180).

22. Mower according to any one of Claims 1 to 21, ***characterised in*** that at least two elastically deformable elements (45; 144, 145; 178), the action of which can be adjusted individually or simultaneously are provided.

23. Mower according to Claim 22, ***characterized in*** that an elastically deformable element (45; 144, 145; 178) is provided near to each end at least of the harvesting mechanism (15; 173).
